(19) **Europäisches Patentamt**

**European Patent Office**

**Office européen des brevets**

(11) Publication number: **0 153 795**
**B1**

(12) # EUROPEAN PATENT SPECIFICATION

(45) Date of publication of patent specification: **06.09.89**

(21) Application number: **85300145.1**

(22) Date of filing: **09.01.85**

(51) Int. Cl.⁴: **G 07 C 9/00, G 06 K 9/22**

(54) **Sign verification.**

(30) Priority: **09.01.84 GB 8400389**

(43) Date of publication of application:
**04.09.85 Bulletin 85/36**

(45) Publication of the grant of the patent:
**06.09.89 Bulletin 89/36**

(84) Designated Contracting States:
**CH DE FR GB IT LI SE**

(56) References cited:
**WO-A-82/03485**
**CH-A- 615 032**
**GB-A-1 480 066**
**GB-A-2 039 118**
**GB-A-2 104 698**
**US-A-3 480 911**
**US-A-3 806 704**
**US-A-3 812 460**
**US-A-3 955 178**
**US-A-4 028 674**
**US-A-4 035 768**

(73) Proprietor: **THE DE LA RUE COMPANY PLC**
**De La Rue House 3/5 Burlington Gardens**
**GB-London W1A 1DL (GB)**

(72) Inventor: **Dunkley, Rowland Arthur George**
**2 Yew Tree Close Ivanhoe**
**Leighton Buzzard Beds, LU7 9ET (GB)**

(74) Representative: **Skone James, Robert Edmund**
**et al**
**GILL JENNINGS & EVERY 53-64 Chancery Lane**
**London WC2A 1HN (GB)**

Courier Press, Leamington Spa, England.

## Description

The invention relates to a method and apparatus for determining that a sign written on a writing surface has been written in the same manner as a previously recorded sign. In particular, the invention relates to the verification of signatures.

Previously known techniques for verifying signatures can be divided broadly into two categories. Dynamic (or temporal) signature verification utilises measurements of the characteristics of writing instrument movements that are executed during the signing process. These techniques vary but include the use of special signing pads which measure the motion of the writing instrument over the signing pad; the use of special pens to measure the motion of the pen tip on, or off, the signing pad; and the use of special pens for detecting motion in combination with special signing pads for detecting variations in writing pressure at the pen tip.

US-A-3480911 describes a signature identification system in which two dynamic characteristics are determined: the total time for which the writing instrument is in contact with a writing surface and the number of in contact occasions.

Signataries vary in their consistency of signing. Some individuals write entirely without pause, whilst others have frequent pen lifts (with variable pauses occurring whilst the pen is in the air). During a pen lift, the pen may describe characteristic motions in the air. However, these characteristics vary in the course of time while writing pressures can vary in response to how well the writing instrument is inking. Thus the use of dynamic verification methods has many problems particularly in achieving a high success rate in the acceptance of true signatures.

A second approach is that of static verification which utilises the application of pattern recognition technology. There are two basic techniques. Firstly, image recognition where the system is trained to recognise the total image of a particular pattern (i.e. the signature): and Feature Analysis where the system is used to recognise the detailed features of a particular pattern.

Various static characteristics of signatures are described in GB-A-1480066 and GB-A-2104698.

The signature as a pattern is, in general, more consistent than the signing process and to that extent static verification is preferable to dynamic verification. However, static verification is vulnerable to forgery particularly in the case of unattended cash dispensers/automatic teller mechanisms where the forger can spend time in copying a true signature.

In accordance with one aspect of the present invention, a method of determining that a sign written on a writing surface has been written in the same manner as a previously recorded sign or signs comprises for at least a portion of the sign determining at least one temporal characteristic value of the sign; determining at least one spatial characteristic value of the portion of the written sign; and comparing the determined temporal and spatial characteristic values with corresponding characteristic values determined from the previously recorded sign or signs characterized that the at least one temporal characteristic value is related only to one or more of the following temporal characteristics:

a) the time during which a writing instrument is in contact with the writing surface,

b) the time during which the writing instrument is out of contact with the writing surface, and

c) the total time for writing the portion of the sign.

In accordance with a second aspect of the present invention, apparatus for determining that a sign has been written in the same manner as a previously recorded sign or signs comprises a pad supporting a writing surface; temporal characteristic determining means for determining for at least a portion of the written sign at least one temporal characteristic value; spatial characteristic determining means for determining at least one spatial characteristic value of the portion of the written sign; and comparison means for comparing the determined temporal and spatial characteristic values with corresponding characteristic values determined from the previously recorded sign or sign and is characterised in that the temporal characteristic determining means is only capable of determining a temporal characteristic value related to one or more of the following temporal characteristics

a) the time during which a writing instrument is in contact with the writing surface,

b) the time during which the writing instrument is out of contact with the writing surface, and

c) the total time for writing the portion of the sign.

The inventors have recognised that although it would be desirable simply to combine the known dynamic and spatial verification systems to produce a more accurate system (as is generally suggested in GB-A-1480066 and GB-A-2104698), the resulting system would, in fact, be too sophisticated and it has been realised that it is only necessary to provide a fairly simple dynamic verification procedure to determine the likely presence of a genuine signer in combination with known spatial verification techniques to develop a highly accurate composite system.

The necessity of simply having to determine times for which a writing instrument is in contact and out of contact with the writing surface requires for example only a simple pressure sensitive pad and also leads to a significant reduction in the amount of data which is required to characterise a particular sign, for example a signature.

Alternatively, the pad could be a conventional X-Y pad such as is shown in GB-A-1201424.

The temporal characteristic values may represent one or more of the total time for writing the sign and the total in/out contact times, or some function of these times, or they may represent functions of or of combinations of all or parts of the in and out of contact times. For example, one particularly advantageous method comprises determining the total time for writing the sign to generate a first value, determining the total out of contact time, and generating a second value proportional to the total out of contact time divided by the total time for writing the sign.

It has been found that this new method and apparatus is not significantly sensitive to normal variations in a signature and does not require frequent up-dates of the prerecorded characteristic values.

A further advantage is that no special pen is needed and a wide range of writing instruments may be utilised.

As has been mentioned above, when a pressure sensitive pad is used this may have a particularly simple construction and conveniently comprises a diaphragm which supports the writing surface normally spaced from a base. With this construction, when a sign is written on the writing surface, contact of the writing instrument with the writing surface will cause contact between the diaphragm and the base which will provide signals to enable the time during which the writing instrument is in contact with the writing surface to be determined. The absence of output signals from the base will indicate the times during which the writing instrument is not in contact with the writing surface, while the total of these two times will indicate the total time for writing the sign.

In some cases, the base may be segmented to enable the temporal characteristics of portions of the sign to be determined.

Although the spatial characteristics of the sign could be determined while the sign is in the same position at which it was created, preferably, particularly where a pressure sensitive pad is used, the writing surface is moved to a spatial characteristic detecting station inaccessible to the user.

Conveniently, the apparatus comprises means for determining when the writing instrument has been out of contact with the writing surface for a predetermined time. When a pressure sensitive pad is used the writing surface may be moved automatically at this time to the spatial characteristic detecting station. In this case, the apparatus may further comprise means for automatically advancing the writing material past the pressure pad after each sign has been written.

When an X-Y pad is used, a spatial characteristic detecting station is not required since the signature will be digitized as it is written.

In addition, the writing surface may be defined by part of the pad, particularly when an X-Y pad is used. Alternatively, the writing surface may be provided by a writing material positioned over pad.

The writing surface could be provided by a slip of paper but preferably, the writing surface comprises a portion of an elongate strip of writing material, such as paper, which is fed over elements of the pad from a supply roller to take up roller.

Conveniently, a mask is provided to define an aperture through which a section of the writing surface is accessible to a writing instrument. This assists scanning means, where provided, to determine spatial characteristic features of the sign to locate the written sign. In addition, a yellow line may be provided on the writing surface along which the user may write the sign. The advantage of the colour yellow is that by suitable choice of spectral sensitivity the scanning means may be prevented from detecting the yellow line while remaining sensitive to any colour (except yellow) in which the sign may be written.

In some cases, particularly where a paper strip is provided, there may be a risk of tearing for example when the writing instrument punctures the paper and the paper is then automatically fed to the spatial characteristic determining station. Conveniently, therefore, where a mask is provided the paper has a width substantially twice the width of the aperture defined by the mask.

Spatial characteristic values may be determined in any conventional manner from for example measures including total chord length and the distances between lines within which 80% of the sign lies.

An example of a method and apparatus for verifying a signature in accordance with the present invention will now be described with reference to the accompanying drawings, in which:

Figure 1 is a schematic block diagram of the apparatus with some parts omitted for clarity;

Figure 2 is a partial plan of the pressure sensitive assembly shown in Figure 1:

Figure 3 is a cross-section through the pressure sensitive assembly shown in Figure 2;

Figure 4 illustrates a modification to the assembly shown in Figure 3; and

Figure 5 is a flow diagram illustrating the steps carried out by a controlling microcomputer.

The apparatus comprises a feed roller 1 around which is wound a length of paper 2. The paper 2 is fed past a friction brake 3 and over a guide roller 4 to a writing station 5. The writing station 5 comprises a pressure sensitive pad or assembly 6 to be described in detail below. The paper 2 passes from the writing station 5 to a guide roller 7, past a drive capstan 8 and a guide roller 9 to a take up roller 10 around which the paper 2 is rolled.

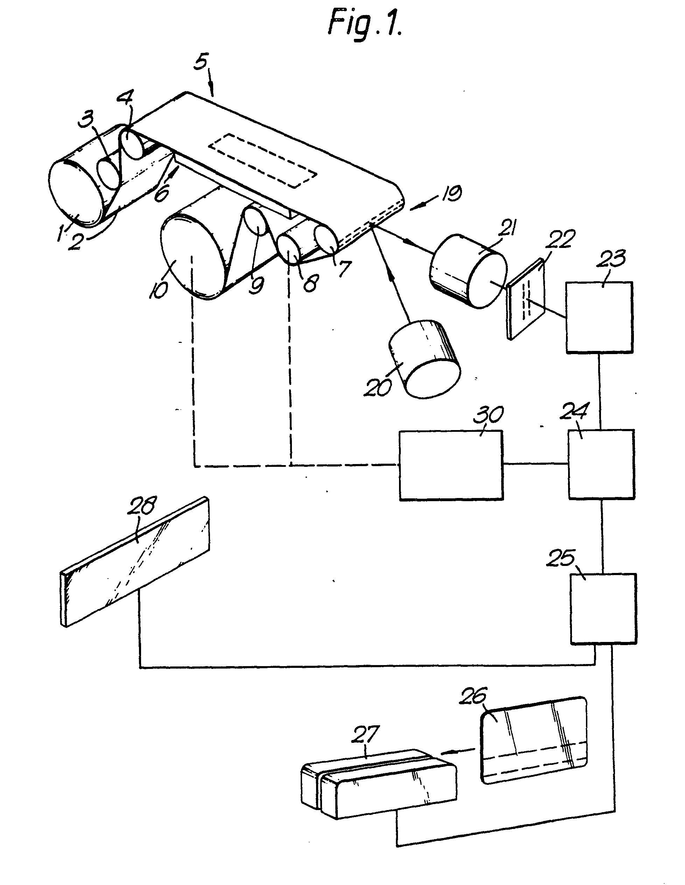

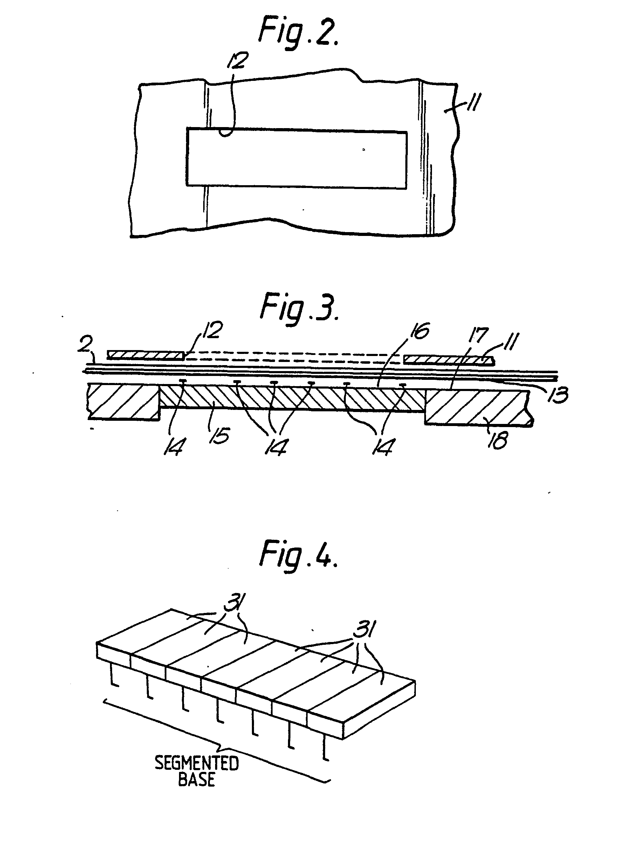

The writing station 5 is shown in more detail in Figures 2 and 3. A mask 11 in the form of a protective plate (not shown in Figure 1) is mounted above the paper 2 and defines a signing aperture 12 of rectangular form. A diaphragm 13 is mounted below the paper 2 and is spaced by a plurality of spacers 14 from a base 15. An upper surface 16 of the base 15 is flush with an upper face 17 of a supporting housing 18.

The apparatus described above will normally be housed in a secure housing (not shown) inaccessible to the user and conveniently the rollers 1, 4, 7, 8, 9 and 10, and the friction brake 3 will be mounted in a cartridge which can be slotted into the supporting housing.

The length of the paper 2 at the writing station 5 will be in a state of tension caused by the action of the brake 3 and the drive capstan 8. This assists in preventing tearing of the paper. The width of the paper 2 is at least twice that of the aperture 12. The roller 7 is positioned close to the right hand edge of the aperture 12, as seen in Figure 2, to minimise the length of paper between the signing aperture 12 and a static characteristic scanning station 19.

In use, a signatory will write his signature within the aperture 12 on the paper 2. The action of signing causes a transfer of writing pressure, through the paper 2, to the diaphragm 13 which deflects to make electrical contact with the base 15. The stiffness of the diaphragm 13, the amount of spacing between diaphragm 13 and the base 15, and the separation between spacers 14 are all determined to achieve a sensitive response during signing. When a signature has been completed, the drive capstan 8 and take-up roller 10 are activated to draw paper across the writing station 5 through the aperture between the mask 11 and the supporting housing 18 to move the section of the paper 2 on which a signature has been written to the static characteristic sensing station 19. This also brings a fresh, unmarked, section of paper 2 into the writing station 5. During movement of the paper 2, the paper is maintained in tension by means of the friction brake 3.

While the signature is moved through the station 19, it is illuminated by an illumination assembly 20 which illuminates a uniform strip of the paper 2, the illuminated strip being imaged via a scanning or optical system 21 onto a linear array of photo-sensitive elements 22 such as photoelectric diodes. The drive capstan 8 is actuated to cause the paper to be incremented through the station 19 at a constant velocity to assist the scanning step. The velocity is chosen so that, in one scan of the array 22, the paper 2 moves nominally one array element width.

The signals generated by the array 22 are fed to an analogue to digital converter 23 which digitises the analogue signal output by the array 22 by comparing this video signal with a reference level. The video signal from the array 22 is defined as "black" or "white" depending upon whether it is greater or less than this reference level. The reference level is related to the video signal in such a way that it tracks long term changes in the level of the video signal and it is insensitive to short term (rapid) changes. The digitised signal is fed to a control buffer 24 and from there to a conventional micro-computer 25 based on Z80 STD where it is stored and processed.

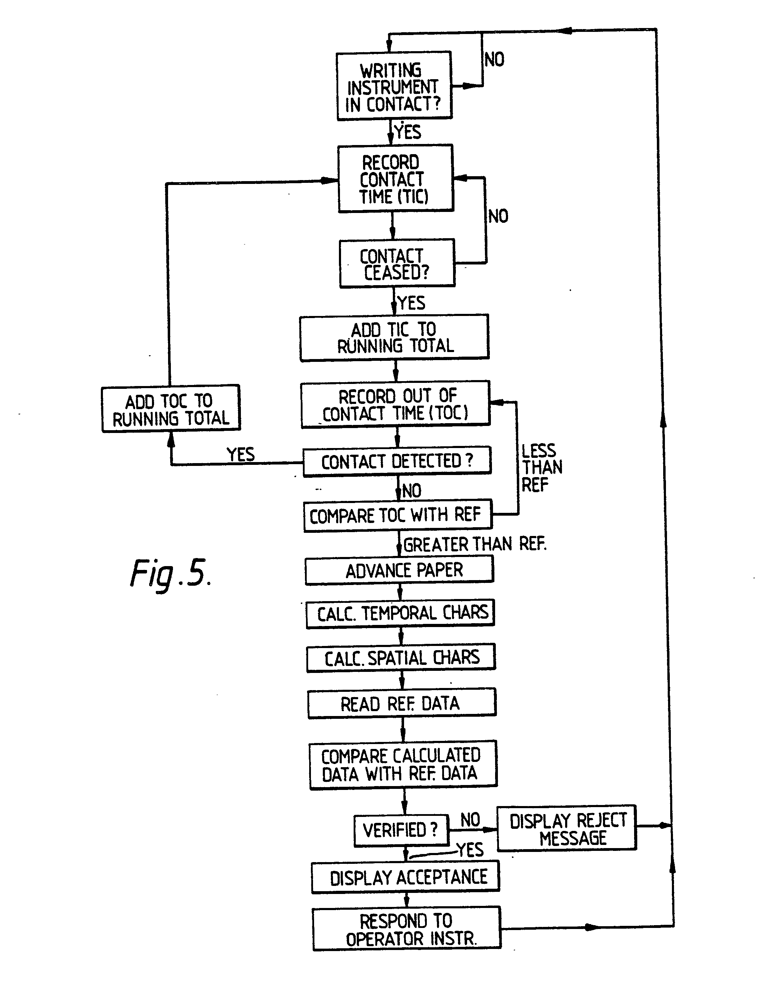

The microcomputer 25 controls the overall operation of the apparatus. The main steps of the computer program stored by the microcomputer 25 are illustrated in Figure 5.

The microcomputer continually senses for the initiation of contact between a writing instrument and the assembly 6 which is sufficient to depress the diaphragm 13 on to the base 15. Electrical signals are then passed along an electrical circuit including a power source (not shown) from the base 15 to the microcomputer 25. The microcomputer determines the contact time (TIC) during which the writing instrument remains in contact with the assembly 6 and detects when the signals cease corresponding to the lifting of the writing instrument from the assembly. As soon as contact has ceased, the determined TIC is added to a TIC running total and the microcomputer starts to time the period for which the instrument is out of contact with the assembly 6 to generate an out of contact time (TOC). This out of contact time may correspond to a period within the signature or to the writing instrument being lifted from the assembly 6 when a signature has been completed. To distinguish between these situations the microcomputer senses for further contact occurring and if this is detected the TOC is added to a TOC running total and the steps for recording TIC are repeated. If no contact is detected the current TOC is compared with a reference which has a value such that if the TOC is greater than the reference this will mean that the signature has been completely written. Thus, if the TOC is less than the reference the TOC continues to be updated.

Once the microcomputer 25 determines that a complete signature has been written it causes a drive motor 30 to activate the drive capstan 8 and the take up roller 10 to draw the paper 2 across the assembly 6 for a predetermined time and to bring the written signature into the static characteristic sensing station 19.

The microcomputer then determines one or more temporal characteristic measures. For example, these measures may comprise the total time for writing the signature which equals TIC + TOC and a measure equal to (TOC)/(TOC + TIC).

As the paper 2 is incremented through the station 19 the microcomputer 25 receives digital signals (as previously described) representing the signature and from which it determines certain static characteristic measures. Examples of static characteristic measures which may be determined are described in GB-A-2104698. In particular, the microcomputer 25 may determine the total chord length and the length and height 10%-90% of the signature. These latter two features are determined by constructing firstly two vertical lines outside which 10% of the signature lies at each end and then measuring the horizontal separation of the lines; and secondly by constructing two horizontal lines outside which 10% of the signature lies and measuring the vertical separation of these lines.

The microcomputer 25 next reads reference data from a magnetic card 26 belonging to the user which is positioned in a magnetic card reader 27 of conventional form. The information stored on the magnetic strip of the card 26 has been derived by obtaining a number, for example six, of genuine signatures, determining the dynamic and static characteristic measures which are to be compared later and determining the mean and standard deviation for each measure as determined from the six genuine signatures. The information stored on the card 26 is constituted by values related to these means and standard deviations.

The microcomputer 25 then compares the measures determined from the new signature with the information stored on the card in any conventional way such as by determining whether the measures fall within limits derived from the means and standard deviations and makes a decision dependent upon the similarity between the newly written signature and the previously written genuine signatures on whether the new signature is genuine. If the signature is verified as genuine the microcomputer 25 causes an appropriate message to be displayed on a monitor 28 visible by the user. The drive motor 30 will stop after the predetermined time period has expired. Thereafter, the microcomputer 25 responds to further instructions from the user or operator depending upon the context in which the apparatus is used. For example, if the apparatus is positioned in cash dispensing apparatus then the microcomputer 25 will allow a desired cash sum to be dispensed to the user. Alternatively, if the apparatus is used to allow access to be gained to a facility, such as a building, it will cause any locks provided to be unlocked.

Alternatively, if verification is not achieved a reject message is displayed on the display 28, the drive motor 30 is stopped (as before) and no further operator instructions are allowed.

The system then returns to the initial position at the beginning of the flow diagram shown in Figure 5.

Figure 4 illustrates a modified form for the base 15 which comprises a plurality of individual base portions 31. In this modification, the temporal characteristics of different portions of the overall signature can be determined individually, which can be useful in certain applications.

## Claims

1. A method of determining that a sign written on a writing surface has been written in the same manner as a previously recorded sign or signs, the method comprising for at least a portion of the sign determining at least one temporal characteristic value of the sign; determining at least one spatial characteristic value of the portion of the written sign; and comparing the determined temporal and spatial characteristic values with corresponding characteristic values determined from the previously recorded sign or signs characterised in that the at least one temporal characteristic value is related only to one or more of the following temporal characteristics:

a) the time during which a writing instrument is in contact with the writing surface,

b) the time during which the writing instrument is out of contact with the writing surface, and

c) the total time for writing the portion of the sign.

2. A method according to claim 1, wherein the writing surface is moved to a spatial characteristic detecting station inaccessible to the user after the sign has been written.

3. Apparatus for determining that a sign has been written in the same manner as a previously recorded sign or signs, the apparatus comprising a pad (6) providing a writing surface; temporal characteristic determining means (25) for determining for at least a portion of the written sign at least one temporal characteristic value; spatial characteristic determining means (21-25) for determining at least one spatial characteristic value of the portion of the written sign; and comparison means (25) for comparing the determined temporal and spatial characteristic values with corresponding characteristic values determined from the previously recorded sign or sign characterised in that the temporal characteristic determining means is only capable of determining a temporal characteristic value related to one or more of the following temporal characteristics

a) the time during which a writing instrument is in contact with the writing surface,

b) the time during which the writing instrument is out of contact with the writing surface, and

c) the total time for writing the portion of the sign.

4. Apparatus according to claim 3, wherein the pad is a pressure sensitive pad comprising a diaphragm (13) which supports the writing surface normally spaced from a base (15).

5. Apparatus according to claim 4, wherein the base (14) is segmented to enable the temporal characteristics of portions of the sign to be determined.

6. Apparatus according to any of claims 3 to 5, wherein the writing surface comprises a portion of an elongate strip of writing material (2) which is fed over the pad (6) from a supply roller (1) to a take-up roller (10).

7. Apparatus according to claim 6, further comprising means (25, 30) for automatically advancing the writing material (2) past the pad (6) after each sign has been written.

8. Apparatus according to any of claims 3 to 7, further comprising means (25) for determining when the writing instrument has been out of contact with the writing surface for a predetermined time.

9. Apparatus according to any of claims 3 to 8, wherein a mask (11) is provided to define an aperture (12) through which a section of the writing surface (2) is accessible to a writing instrument.

10. Apparatus according to claim 9, wherein the writing material (2) has a width substantially twice the width of the aperture (12) defined by the mask (11).

## Patentansprüche

1. Verfahren zum Prüfen, ob ein auf eine Schreibfläche geschriebenes Zeichen in der gleichen Weise geschrieben worden ist, wie ein oder mehrere zuvor aufgezeichnete(s) Zeichen, wobei das Verfahren für wenigstens einen Teil des Zeichens die Ermittlung wenigstens eines zeitlichen charakteristischen Wertes des Zeichens, die Ermittlung wenigstens eines räumlichen charakteristischen Wertes des Teils des geschriebenen Zeichens und den Vergleich der ermittelten zeitlichen und räumlichen charakteristischen Werte mit entsprechenden charakteristischen Werten umfaßt, die aus dem oder den zuvor aufgezeichneten Zeichen ermittelt werden, dadurch gekennzeichnet, daß der wenigstens eine zeitliche charakteristische Wert nur auf eine oder mehrere der nachfolgenden zeitlichen Charakteristika bezogen wird:

a) die Zeit, während der ein Schreibinstrument mit der Schreibfläche in Berührung ist,

b) die Zeit, während der das Schreibinstrument außer Berührung mit der Schreibfläche ist, und

c) die Gesamtzeit zum Schreiben des Teils des Zeichens.

2. Verfahren nach Anspruch 1, bei dem die Schreibfläche nach dem Schreiben des Zeichens in eine für den Benutzer unzugängliche Station zur Ermittlung einer räumlichen Charakteristik bewegt wird.

3. Vorrichtung zur Ermittlung, ob ein Zeichen in der gleichen Weise geschrieben worden ist, wie ein oder mehrere zuvor aufgezeichnete(s) Zeichen, enthaltend eine Schreibunterlage (6), die eine Schreibfläche bildet, eine Ermittlungseinrichtung (25) für zeitliche Charakteristik zur Ermittlung wenigstens eines zeitlichen charakteristischen Wertes für wenigstens einen Teil des geschriebenen Zeichens, eine Ermittlungseinrichtung (21-25) für räumliche Charakteristik zur Ermittlung wenigstens eines räumlichen charakteristischen Wertes des Teils des geschriebenen Zeichens und eine Vergleichseinrichtung (25) zum Vergleichen der ermittelten zeitlichen und räumlichen charakteristischen Werte mit entsprechenden charakteristischen Werten, die aus dem oder den zuvor aufgezeichneten Zeichen ermittelt werden, dadurch gekennzeichnet, daß die Ermittlungseinrichtung für zeitliche Charakteristik nur in der Lage ist, einen zeitlichen charakterischen Wert zu ermitteln, der auf eine oder mehrere der nachfolgenden zeitlichen Charakteristika bezogen ist:

a) die Zeit, während der ein Schreibinstrument mit der Schreibfläche in Berührung ist,

b) die Zeit, während der das Schreibinstrument außer Berührung mit der Schreibfläche ist, und

c) die Gesamtzeit zum Schreiben des Teils des Zeichens.

4. Vorrichtung nach Anspruch 3, bei der die Schreibunterlage eine druckempfindliche Schreibunterlage ist, enthaltend eine Membran (13), die die Schreibfläche normalerweise im Abstand von einer Unterlage (15) trägt.

5. Vorrichtung nach Anspruch 4, bei der die Unterlage (14) segmentiert ist, um die Ermittlung der zeitlichen Charakteristika von Teilen des Zeichens zu ermöglichen.

6. Vorrichtung nach einem der Ansprüche 3 bis 5, bei der die Schreibfläche ein Teil eines langgestreckten Streifens aus Schreibmaterial (2) ist, das über die Schreibunterlage (6) von einer Zuführwalze (1) zu einer Aufnahmewalze (10) gefördert wird.

7. Vorrichtung nach Anspruch 6, weiterhin enthaltend eine Einrichtung (25, 30) zum automatischen Fortbewegen des Schreibmaterials (2) an der Schreibunterlage (6) vorbei, nachdem jedes Zeichen geschrieben worden ist.

8. Vorrichtung nach einem der Ansprüche 3 bis 7, weiterhin enthaltend eine Einrichtung (25) zum Ermitteln, wann das Schreibinstrument den Berührungskontakt mit der Schreibfläche für eine vorbestimmte Zeit verloren hat.

9. Vorrichtung nach einem der Ansprüche 3 bis 8, bei der eine Maske (11) vorgesehen ist, um ein Fenster (12) zu bestimmen, durch das ein Ausschnitt der Schreibfläche (2) für ein Schreibinstrument zugänglich ist.

10. Vorrichtung nach Anspruch 9, bei der das Schreibmaterial (2) eine Breite aufweist, die im wesentlichen doppelt so groß wie die Breite des durch die Maske (11) definierten Fensters (12) ist.

**Revendications**

1. Procédé de détermination qu'un signe écrit sur une surface d'écriture a été écrit de la même manière qu'un signe ou des signes enregistrés antérieurement, le procédé comprenant au moins pour une portion du signe, la détermination d'au moins une valeur de caractéristique temporelle du signe; la détermination d'au moins une valeur de caractéristique spatiale de la portion du signe écrit; et la comparaison des valeurs de caractéristiques temporelle et spatiale déterminées avec les valeurs des caractéristiques correspondantes déterminées à partir du signe ou des signes enregistrés antérieurement caractérisé en ce qu'au moins une valeur de caractéristique temporelle est relative seulement à une ou plusieurs des caractéristiques temporelles suivantes:

a) le temps pendant lequel un instrument d'écriture est en contact avec la surface d'écriture,

b) le temps pendant lequel l'instrument d'écriture est hors de contact avec la surface d'écriture, et

c) le temps total pour écrire la portion du signe.

2. Procédé selon la revendication 1, dans lequel la surface d'écriture est déplacée vers un poste de détection de caractéristique spatiale inaccessible à l'utilisateur après que le signe a été écrit.

3. Appareil pour déterminer qu'un signe a été écrit de la même manière qu'un signe ou des signes enregistrés antérieurement, l'appareil comprenant un bloc (6) fournissant une surface d'écriture, un moyen (25) de détermination de caractéristique temporelle, servant à déterminer, pour au moins une portion du signe écrit, au moins une valeur de caractéristique temporelle: un moyen (21-25) de détermination de caractéristique spatiale servant à déterminer au moins une valeur de caractéristique spatiale de la portion du signe écrit; et un moyen de comparaison (25) servant à comparer les valeurs déterminées de caractéristiques temporelle et spatiale avec des valeurs de caractéristiques correspondantes déterminées à partir du signe ou des signes enregistrés antérieurement, caractérisé en ce que le moyen de détermination de caractéristique temporelle est seulement propre à déterminer une valeur de caractéristique temporelle relative à une ou plusieurs des caractéristiques temporelles suivantes:

a) le temps pendant lequel un instrument d'écriture est en contact avec la surface d'écriture.

b) le temps pendant lequel l'instrument d'écriture est hors de contact avec la surface d'écriture, et

c) le temps total pour écrire la portion du signe.

4. Appareil selon la revendication 3, dans lequel ie bloc est un bloc sensible à la pression comprenant un diaphragme (13) qui supporte la surface d'écriture normalement espacée d'une surface de base (15).

5. Appareil selon la revendication 4, dans lequel la surface de base (14) est segmentée de manière à permettre aux caractéristiques temporelles de portion du signe d'être déterminées.

6. Appareil selon l'une quelconque des revendications 3 à 5, dans lequel la surface d'écriture comprend une portion d'une bande allongée de matériau d'écriture (2) qui est avancée sur le bloc (6) depuis un rouleau d'alimentation (1) jusqu'à un rouleau récepteur (10).

7. Appareil selon la revendication 6, comprenant en outre un moyen (25, 30) servant à avancer de manière automatique le matériau d'écriture (2) au-delà du bloc (6) après que chaque signe ait été écrit.

8. Appareil selon l'une quelconque des revendications 3 à 7, comprenant en outre un moyen (25) servant à déterminer quand l'instrument d'écriture a été hors de contact avec la surface d'écriture pendant une durée prédéterminée.

9. Appareil selon l'une quelconque des revendications 3 à 8, dans lequel un masque (11) est prévu pour définir une ouverture (12) à travers laquelle une section de la surface d'écriture (2) est accessible à un instrument d'écriture

10. Appareil selon la revendication 9, dans lequel le matériau d'écriture (2) a une largeur sensiblement double de la largeur de l'ouverture (12) définie par le masque (11).

# Fig.1.

# Fig.2.

# Fig.3.

# Fig.4.

SEGMENTED
BASE

Fig.5.